(19) Europäisches Patentamt
European Patent Office
Office européen des brevets

(11) Veröffentlichungsnummer: **0 012 349**
**B1**

(12) # EUROPÄISCHE PATENTSCHRIFT

(45) Veröffentlichungstag der Patentschrift: **04.11.81**

(51) Int. Cl.³: **C 09 B 62/036,** D 06 P 3/66

(21) Anmeldenummer: **79104935.6**

(22) Anmeldetag: **05.12.79**

(54) **Verfahren zur Herstellung von Phthalocyanin-Reaktivfarbstoffen.**

(30) Priorität: **13.12.78 DE 2853823**

(43) Veröffentlichungstag der Anmeldung: **25.06.80 Patentblatt 80/13**

(45) Bekanntmachung des Hinweises auf die Patenterteilung: **04.11.81 Patentblatt 81/44**

(84) Benannte Vertragsstaaten: **CH DE FR GB IT**

(56) Entgegenhaltungen:
**FR-A-1 561 704**
**FR-A-1 563 661**
**FR-A-2 330 739**
**FR-A-2 396 049**
**US-A-3 989 692**

(73) Patentinhaber: **BAYER AG, Zentralbereich Patente, Marken und Lizenzen, D-5090 Leverkusen 1, Bayerwerk (DE)**

(72) Erfinder: **Groll, Manfred, Dr., Haferkamp 6, D-5000 Köln 80 (DE)**

**EP 0 012 349 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Phthalocyanin-Reaktivfarbstoffen

Die vorliegende Erfindung betrifft ein neues Verfahren zur Herstellung von Phthalocyanin-Reaktivfarbstoffen.

Gemäß dem Stand der Technik wird bei der Herstellung von Phthalocyanin-Reaktivfarbstoffen der allgemeinen Formel (I) vom vollständig sulfochlorierten Phthalocyanin ausgegangen, das nachträglich zum entsprechenden Sulfoderivat hydrolysiert wird. Siehe dazu US-PS 3 989 692, Col. 16, Zeilen 18/19 und FR-PS 2 330 739, S. 12, Zeilen 19/29.

Demgegenüber geht die erfindungsgemäße Herstellung von einem Phthalocyanin-Derivat aus, worin die Chlorsulfonylgruppen bereits im Anteil p/p+q zu Sulfogruppen hydrolysiert sind. Diese Herstellungsvariante ist neu, liefert in besonders vorteilhafter Weise die gewünschten Endprodukte und ist in bezug auf den zitierten Stand der Technik nicht naheliegend.

Im folgenden sei das erfindungsgemäße Herstellungsverfahren charakterisiert.

Es wurde gefunden, daß man Phthalocyanin-Reaktivfarbstoffe der Formel

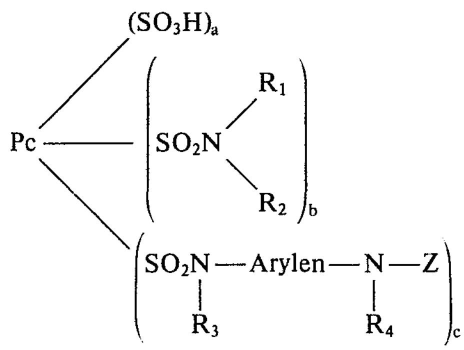

(I)

worin

Pc = Rest eines Kupfer- oder Nickel-Phthalocyanins
$R_1$, $R_2$ = Wasserstoff, gegebenenfalls substituiertes Alkyl
$R_3$, $R_4$ = Wasserstoff, gegebenenfalls substituiertes Alkyl
Arylen = ein- oder mehrgliedriges, gegebenenfalls substituiertes Arylen, das gegebenenfalls durch ein Sauerstoffatom oder eine Imino-, Carbonyl-, Carbonamid-, Harnstoff-, Sulfonyl- oder Sulfonamid-Gruppe unterbrochen sein kann

Z =

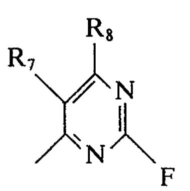

(IIa) oder

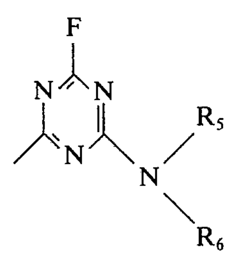

(IIb)

$R_5$, $R_6$ = Wasserstoff, gegebenenfalls substituiertes Alkyl, gegebenenfalls substituiertes Aralkyl oder gegebenenfalls substituiertes Aryl
$R_7$ = H, Cl
$R_8$ = H, F, $CH_3$
a = 1 bis 3
b = 0 bis 2
c = 1 bis 2 und $a+b+c \leqq 4$

in besonders vorteilhafter Weise erhält durch Umsetzung von Phthalocyaninsulfonsäurechloridsulfonsäuren der Formel

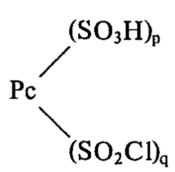

(III)

worin

p = 0,5 bis 1,8 (vorzugsweise 0,8 bis 1,4 oder, falls b=0, 1,0 bis 1,6)
q = 1,2 bis 3,5 und p+q=2 bis 4,

mit c Mol eines monoacylierten Arylendiamins der Formel

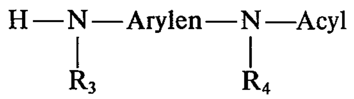

(IV)

worin $R_3$, $R_4$ und Arylen die obengenannte Bedeutung haben und Acyl eine Acylgruppe darstellt, und gegebenenfalls b Mol eines Amins der Formel

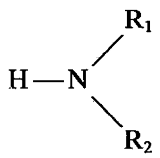

(V)

worin $R_1$ und $R_2$ die obengenannte Bedeutung haben, anschließender Verseifung der Acylaminogruppe und folgender Umsetzung mit c Mol einer Verbindung der Formel

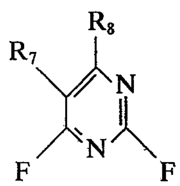

(VI)

oder mit c Mol einer Verbindung der Formel

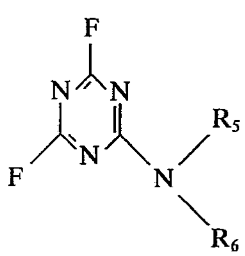

(VII)

worin $R_5-R_8$ die oben angegebene Bedeutung haben.

Der Umsatz von Phthalocyaninsulfochlorid-sulfonsäure der Formel (III) mit monoacylierten Diaminen der Formel (IV) und gegebenenfalls Aminen der Formel (V) erfolgt in bekannter Weise in wäßrig oder wäßrig/organischem Medium bei Temperaturen von 0° bis 80° und in einem pH-Bereich von 4 bis 12.

Geeignete monoacylierte Diamine der Formel (IV) sind beispielsweise

2-Aminoformanilid, 3-Aminoacetanilid, 3-Aminophenyloxyamidsäure, 4-Aminoformanilid, 4-Aminoacetanilid, 2-Aminoacetanilid, 4-Amino-(acetylmethyl)-anilin, 4-Aminophenyloxyamidsäure, 2,5-Dichlor-4-aminoacetanilid, 4-Amino-2-formylaminotoluol, 4-Amino-2-acetylaminotoluol, 2-Amino-4-acetylaminotoluol, 2-Amino-4-(acetyläthylamino)-toluol, [(3-Amino-4-methylphenyl)-amino]-oxoessigsäure, (4'-Amino-4-diphenylyl)-oxamidsäure, 2-Amino-4-acetylaminobenzoesäure, 2-Amino-5-acetylaminobenzoesäure, 3-Amino-5-acetylaminobenzoesäure, 4-Amino-4'-acetylaminodiphenyl-2-sulfonsäure, 2-Sulfo-4-aminophenyl-oxamidsäure und (5-Sulfo-3-amino-2-methylphenyl)-oxamidsäure.

Innerhalb dieser Gruppe sind besonders geeignete monoacylierte Diamine der Formel (IV) solche, bei denen Arylen einen Phenylrest darstellt, der gegebenenfalls durch Methyl- oder Äthylgruppen oder durch Halogen-Atome substituiert ist, wie z. B. 3-Aminoformanilid, 3-Aminoacetanilid, 3-Aminophenyloxamidsäure, 4-Aminoformanilid, 4-Aminophenyloxamidsäure, 2,5-Dichlor-4-aminoacetanilid, 4-Amino-(acetyl-methylanilin), 4-Amino-2-formylaminotoluol und 2-Amino-4-acetylaminotoluol.

Geeignete Verbindungen der Formel (VI) sind 2,4,6-Trifluor-5-chlor-pyrimidin, 2,4-Difluor-5-chlor-6-methylpyrimidin, 2,4,6-Trifluorpyrimidin und 2,4-Difluor-5-chlor-1,3-pyrimidin.

Geeignete Verbindungen der Formel (VII) sind in der Literatur in großer Zahl beschrieben. Besonders bevorzugt sind hierbei Verbindungen, in denen der Rest $-NR_5R_6$ die Gruppierung

$-NH_2$ $-NHCH_3$ 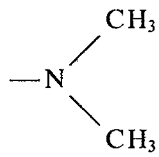 $-NHC_2H_5$ 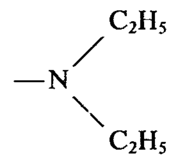

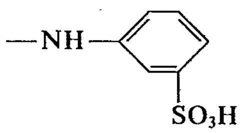 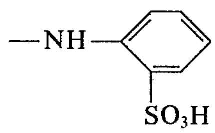 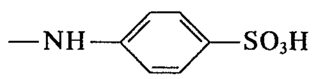

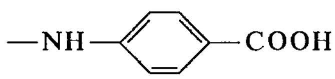 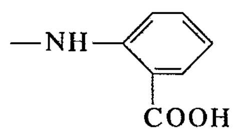 und 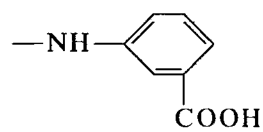

darstellt.

Die Herstellung der Phthalocyaninsulfonsäurechloridsulfonsäuren erfolgt in bekannter Weise durch Behandlung von Kupferphthalocyanin oder Nickelphthalocyanin oder deren Sulfonsäuren mit Chlorsulfonsäure bei 100° bis 145°, wobei Temperaturen zwischen 110° und 138° C bevorzugt sind. Hierbei kann man durch Variation der Chlorsulfonsäuremenge das Verhältnis der Sulfochloridgruppen und Sulfonsäuregruppen zueinander variieren. Daneben kann man das Verhältnis von p und q durch Nachbehandlung der Chlorsulfonsäure-Schmelze mit einer geeigneten Menge Thionylchlorid, Phosphoroxychlorid oder Phosphorpentachlorid vorzugsweise bei Temperaturen zwischen 70° und 95° C variieren.

Die nach dem erfindungsgemäßen Verfahren erhaltenen Farbstoffe eignen sich zum Färben und Bedrucken von Cellulose. Zum Färben aus langer Flotte und zum Klotzfärben eignen sich insbesondere diejenigen Farbstoffe, die im Arylenrest keine Sulfo- oder Carboxygruppe aufweisen.

## Beispiel 1

a) in 310 g Chlorsulfonsäure werden 57,2 g Nickelphthalocyanin eingerührt. Man steigert die Temperatur auf 132° C und rührt 6 Stunden bei 132° – 134° C, kühlt auf 85° C ab und rührt bei dieser Temperatur in 1/3 Stunde 19 g Thionylchlorid ein. Hierauf rührt man noch 4 Stunden bei 90° – 92° C nach und kühlt die Schmelze auf 25° – 30° C ab. Man erhält auf diese Weise eine Lösung von Nickelphthalocyaninsulfochloridsulfonsäure in Chlorsulfonsäure mit etwa 1,4-Sulfonsäuregruppen und 2,6 Sulfonsäurechloridgruppen je Nickelphthalocyanin-Molekül.

Die Chlorsulfonsäure-Lösung wird auf Eis gegeben, die eiskalte Suspension abgesaugt und das Nutschgut mit etwa 400 ml Eiswasser, dem 150 ml Salzsäure (30%ig) zugesetzt sind, gewaschen.

b) Die Nickelphthalocyaninsulfonsäure-sulfosäurechlorid-Paste wird in Eiswasser angeschlagen und mit Natronlauge neutralisiert. Nun gibt man 16,3 g 3-Aminoformanilid zu. Man steigert die Temperatur in etwa 1 1/2 Stunden auf 20° – 25° C und rührt bis zur Beendigung der Umsetzung bei dieser Temperatur. Während der gesamten Reaktionszeit hält man den pH-Wert der Suspension durch portionsweise Zugabe von 14 g $NaHCO_3$ bei 6 – 7. Anschließend stellt man den pH-Wert der Suspension mit Natronlauge auf 9,5 bis 10 und steigert unter Einhalten dieses pH-Wertes die Temperatur der Lösung innerhalb von 4 Stunden auf 75° C.

Zur Verseifung der Formylamino-Gruppe läßt man 500 ml 30%iger Salzsäure zulaufen, verseift 2 Stunden bei 75° – 80° C, saugt das Reaktionsprodukt ab und wäscht es mit 1000 ml 1,5%iger Salzsäure.

c) In 250 ml Eiswasser werden 13,6 g Anilin-3-sulfonsäure angeschlagen. Man stellt den pH-Wert der Suspension mit Natronlauge auf pH 4,0 und läßt unter gutem Rühren 10,7 g 2,4,6-Trifluor-1,3,5-triazin zutropfen, wobei man die Temperatur der Lösung zwischen 0° und 3° C und den pH-Wert mit Hilfe von Sodalösung zwischen 3,0 und 4,0 hält.

Man löst die Hälfte der Paste des durch Versuch b) erhaltenen Phthalocyanin-Derivates bei einem pH-Wert von 5 bis 6 in 500 ml Wasser und kühlt die Lösung auf 0° C. In diese Lösung läßt man die Lösung des in vorstehendem Absatz erhaltenen Difluortriazin-Derivates einlaufen, wobei man den pH-Wert mit Sodalösung auf 5 bis 6 hält. Man steigert die Temperatur der Reaktionslösung auf 25° – 30° C und salzt den Farbstoff nach Beendigung der Umsetzung mit KCl aus. Der Farbstoff wird

abgesaugt, kurz mit verdünnter KCl-Lösung gewaschen und bei 50° bis 60°C getrocknet. Man erhält in praktisch quantitativer Ausbeute den Farbstoff, der in Form seiner freien Säure der Formel

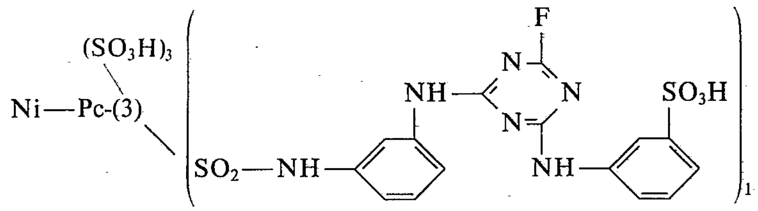

entspricht. Er färbt Baumwolle in grünen Tönen von ausgezeichneten Echtheiten.

d) Man löst die Hälfte der Paste des durch Versuch b) erhaltenen Phthalocyanin-Derivates bei einem pH-Wert von 7 in 500 ml Wasser. Unter gutem Rühren läßt man bei 18° – 22°C in 5 bis 10 Minuten 10 g 5-Chlor-2,4,6-trifluorpyrimidin zutropfen, wobei man den pH-Wert der Lösung mit verdünnter Natronlauge zwischen 6,5 und 7,0 hält. Man rührt bis zur Beendigung der Reaktion bei pH 6,5 – 7,0 nach, salzt den Farbstoff mit NaCl aus, saugt ab, wäscht mit verdünnter Kochsalzlösung nach und trocknet bei 60°C. Man erhält in praktisch quantitativer Ausbeute den Farbstoff, der in Form der freien Säure der Formel

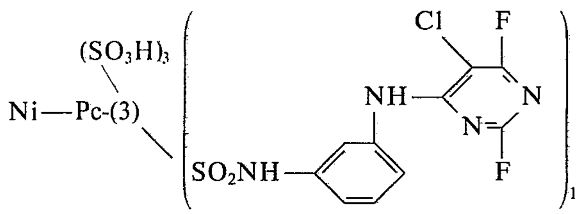

entspricht. Er färbt Baumwolle in grünen Tönen von ausgezeichneten Echtheiten.

e) Arbeitet man wie unter d) beschrieben, gibt jedoch anstelle der 10 g 5-Chlor-2,4,6-trifluorpyrimidin 10 g 2,4-Difluor-6-methylamino-1,3,5-triazin zu und führt die Umsetzung bei pH 5,5 bis 6,5 durch, so erhält man in praktisch quantitativer Ausbeute den Farbstoff, der in Form seiner freien Säure der Formel

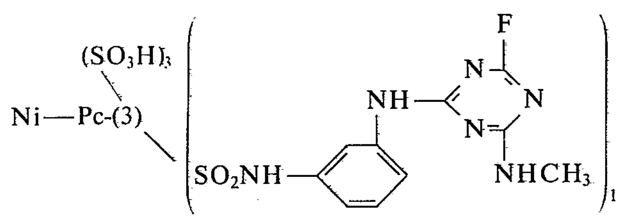

entspricht. Er färbt Baumwolle in grünen Tönen von ausgezeichneten Echtheiten.

f) Arbeitet man wie unter d) beschrieben, gibt jedoch anstelle der 10 g 5-Chlor-2,4,6-trifluorpyrimidin 10 g 2,4-Difluor-5-chlor-6-methylpyrimidin zu und führt die Umsetzung in einem pH-Bereich von 6,0 bis 6,5 und bei einer Temperatur von 25 – 30°C durch, so erhält man in sehr guter Ausbeute den Farbstoff, der in Form seiner freien Säure der Formel

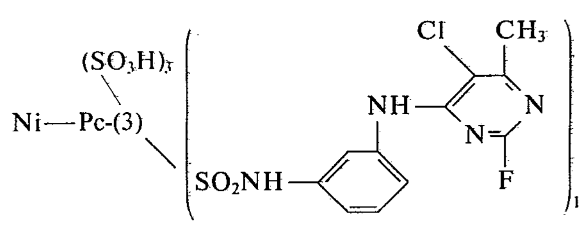

entspricht. Er färbt Baumwolle in grünen Tönen von ausgezeichneten Echtheiten.

Beispiel 2

a) In 310 g Chlorsulfonsäure werden 57,5 g Kupferphthalocyanin eingerührt. Man steigert die Temperatur auf 134°C und rührt 6 Stunden bei 134° – 136°C, kühlt auf 85°C ab und rührt bei dieser Tem-

peratur in 1/2 Stunde 19 g Thionylchlorid ein. Anschließend rührt man noch 4 Stunden bei 90° – 92° C nach und kühlt die Schmelze auf 25° – 30° C ab. Man erhält auf diese Weise eine Lösung von Kupferphthalocyaninsulfochlorid-sulfonsäure in Chlorsulfonsäure mit etwa 1,35 Sulfonsäure-Gruppen und 2,6 Sulfonsäurechlorid-Gruppen je Kupferphthalocyanin-Molekül.

Die Chlorsulfonsäure-Lösung wird auf Eis gegeben, die eiskalte Suspension abgesaugt und das Nutschgut mit etwa 4000 ml Eiswasser, dem 150 ml Salzsäure (30%ig) zugesetzt sind, gewaschen.

b) Die Kupferphthalocyaninsulfonsäure-sulfochlorid-Paste wird in Eiswasser angeschlagen und mit Natronlauge neutralisiert. Nun gibt man 23,4 g 3-Aminophenyloxamidsäure zu. Unter Einstellen und Einhalten eines pH-Wertes von 8,0 – 8,5 läßt man 175 ml 8%ige Natronlauge zutropfen, wobei man die Temperatur der Suspension innerhalb einer Stunde auf 20° – 23° C steigert. Anschließend gibt man 75 ml 2 n-Ammoniak zu und stellt mit Natronlauge auf pH 10. Unter Einhalten dieses pH-Wertes rührt man noch einige Stunden bei 20° – 25° C und steigert die Temperatur der Lösung dann langsam auf 65° C.

Zur Verseifung der Oxalylamino-Gruppe läßt man 500 ml 30%iger Salzsäure zulaufen, verseift 2 Stunden bei 80° C, saugt das Reaktionsprodukt ab und wäscht es mit 1000 ml 1%iger Salzsäure.

c) In 250 ml Eiswasser werden 13,6 g Anilin-3-sulfonsäure angeschlagen. Man stellt den pH-Wert der Suspension mit Natronlauge auf 4,0 und läßt unter gutem Rühren 10,7 g 2,4,6-Trifluor-1,3,5-triazin zutropfen, wobei man die Temperatur der Lösung zwischen 0° und 3° C und den pH-Wert mit Hilfe von Sodalösung zwischen 3,0 und 4,0 hält.

Man löst die Hälfte der Paste des durch Versuch b) erhaltenen Phthalocyanin-Derivates bei einem pH-Wert von 5 bis 6 in 500 ml Wasser und kühlt die Lösung auf 0° C ab. In diese Lösung läßt man die Lösung des in vorstehendem Absatz erhaltenen Difluortriazin-Derivates einlaufen, wobei man den pH-Wert mit Sodalösung auf 5 bis 6 hält. Man steigert die Temperatur der Reaktionslösung auf 25° C und salzt den Farbstoff nach Beendigung der Umsetzung aus. Der Farbstoff wird abgesaugt, kurz mit verd. NaCl-Lösung gewaschen und bei 50° C bis 60° C getrocknet. Man erhält in sehr guter Ausbeute den Farbstoff, der in Form seiner freien Säure der Formel

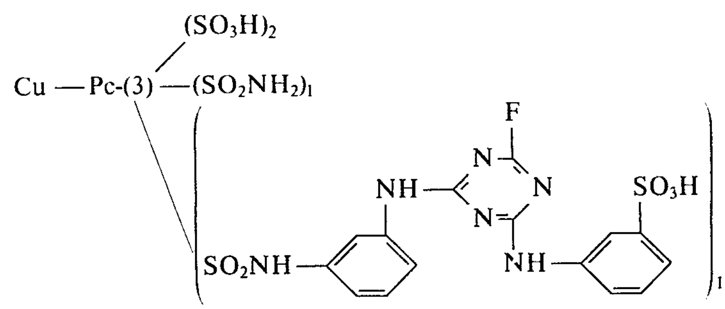

entspricht. Er färbt Baumwolle in türkisblauen Tönen von ausgezeichneten Echtheiten.

d) Man löst die Hälfte der Paste des durch Versuch b) erhaltenen Kupferphthalocyanin-Derivates bei einem pH-Wert von 7 in 750 ml Wasser. Unter gutem Rühren läßt man bei 18° – 22° C in 5 bis 10 Minuten 10 g 5-Chlor-2,4,6-trifluorpyrimidin zutropfen, wobei man den pH-Wert der Lösung mit verdünnter Natronlauge zwischen 6,5 und 7,0 hält. Man rührt bis zur Beendigung der Reaktion, salzt den Farbstoff mit NaCl aus, saugt ab, wäscht mit verdünnter Kochsalzlösung nach und trocknet bei 60° C. Man erhält in sehr guter Ausbeute den Farbstoff, der in Form seiner freien Säure der Formel

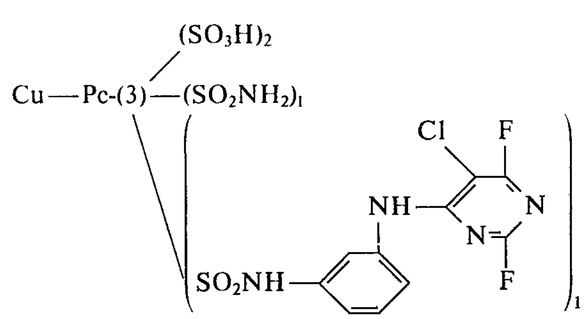

entspricht. Er färbt Baumwolle in türkisblauen Tönen von ausgezeichneten Echtheiten.

e) Arbeitet man wie unter d) beschrieben, gibt jedoch anstelle der 10 g 5-Chlor-2,4,6-trifluorpyrimidin 10 g 2,4-Difluor-6-methylamino-1,3,5-triazin zu und führt die Umsetzung bei einem pH-Wert von 5,5 bis 6,5 durch, so erhält man in sehr guter Ausbeute den Farbstoff, der in Form seiner freien Säure der Formel

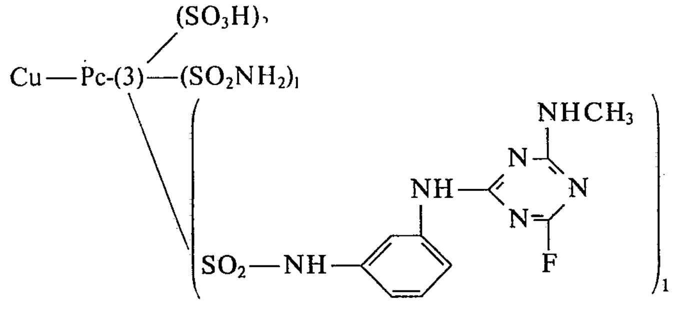

entspricht. Er färbt Baumwolle in türkisblauen Tönen von ausgezeichneten Echtheiten.

f) Arbeitet man wie unter d) beschrieben, gibt jedoch anstelle der 10 g 5-Chlor-2,4,6-trifluorpyrimidin 10 g 2,4-Difluor-5-chlor-6-methylpyrimidin zu und führt die Umsetzung in einem pH-Bereich von 6,0–6,5 und bei einer Temperatur von 25°–30°C durch, so erhält man in sehr guter Ausbeute den Farbstoff, der in Form seiner freien Säure der Formel

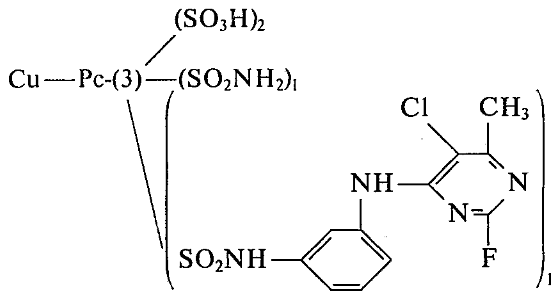

entspricht. Er färbt Baumwolle in türkisblauen Tönen von ausgezeichneten Echtheiten.

## Beispiel 3

a) In 310 g Chlorsulfonsäure werden 57,5 g Kupferphthalocyanin eingerührt. Man steigert die Temperatur auf 134°C und rührt 6 Stunden bei 134°–136°C, kühlt auf 85°C ab und rührt bei dieser Temperatur in 1/2 Stunde 33 g Thionylchlorid ein. Anschließend rührt man noch 4 Stunden bei 90°–92°C nach und kühlt die Schmelze auf 25°–30°C ab. Man erhält auf diese Weise eine Lösung von Kupferphthalocyaninsulfochloridsulfonsäure in Chlorsulfonsäure mit etwa 1,0 Sulfonsäure-Gruppen und 2,9 Sulfonsäurechlorid-Gruppen je Kupferphthalocyanin-Molekül.

Die Chlorsulfonsäure-Lösung wird auf Eis gegeben, die eiskalte Suspension abgesaugt und das Nutschgut mit etwa 4000 ml Eiswasser, dem 150 ml Salzsäure (30%ig) zugesetzt sind, gewaschen.

b) Die Kupferphthalocyaninsulfonsäure-sulfochlorid-Paste wird in Eiswasser angeschlagen und mit Natronlauge neutralisiert. Nun gibt man 16,3 g 4-Aminoformanilid zu. Zur Umsetzung des Amins hält man den pH-Wert des Reaktionsgemisches durch allmähliche Zugabe von 15 g $NaHCO_3$ einige Stunden zwischen 6 und 7, wobei man die Temperatur auf 20°–25°C steigert. Anschließend gibt man 75 ml 2 n-Ammoniak zu und stellt mit Natronlauge auf pH 10. Unter Einhalten dieses pH-Wertes rührt man noch einige Stunden bei 20°–25°C und steigert die Temperatur der Lösung dann langsam auf 60°–65°C.

Zur Verseifung der Formamino-Gruppe läßt man 500 ml 30%iger Salzsäure zulaufen, verseift 2 Stunden bei 80°C, saugt das Reaktionsprodukt ab und wäscht es mit 1000 ml 1%iger Salzsäure.

c) In 250 ml Eiswasser werden 13,6 g Anilin-3-sulfonsäure angeschlagen. Man stellt den pH-Wert der Suspension mit Natronlauge auf 4,0 und läßt unter gutem Rühren 10,7 g 2,4,6-Trifluor-1,3,5-triazin zutropfen, wobei man die Temperatur der Lösung zwischen 0° und 3°C und den pH-Wert mit Hilfe von Sodalösung zwischen 3,0 und 4,0 hält.

Man löst die Hälfte der Paste des durch Versuch b) erhaltenen Phthalocyanin-Derivates bei einem pH-Wert von 5 bis 6 in 500 ml Wasser und kühlt die Lösung auf 0°C ab. In diese Lösung läßt man die Lösung des in vorstehendem Absatz erhaltenen Difluortriazin-Derivates einlaufen, wobei man den pH-Wert mit Sodalösung auf 5 bis 6 hält. Man steigert die Temperatur der Reaktionslösung auf 25°C und salzt den Farbstoff nach Beendigung der Umsetzung aus. Der Farbstoff wird abgesaugt, kurz mit verdünnter NaCl-Lösung gewaschen und bei 50° bis 60°C getrocknet. Man erhält in praktisch quantitativer Ausbeute den Farbstoff, der in Form seiner freien Säure der Formel

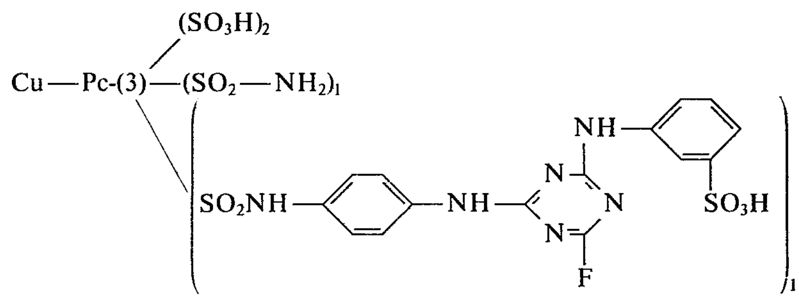

entspricht. Er färbt Baumwolle in türkisen Tönen von ausgezeichneten Echtheiten.

d) Man löst die Hälfte der Paste des durch Versuch b) erhaltenen Kupferphthalocyanin-Derivates bei einem pH-Wert von 7 in 750 ml Wasser. Unter gutem Rühren läßt man bei 18° – 22° C in 5 bis 10 Minuten 10 g 5-Chlor-2,4,6-trifluorpyrimidin zutropfen, wobei man den pH-Wert der Lösung mit verdünnter Natronlauge zwischen 6,5 und 7,0 hält. Man rührt bis zur Beendigung der Reaktion, salzt den Farbstoff mit NaCl aus, saugt ab, wäscht mit verdünnter Kochsalzlösung nach und trocknet bei 60° C. Man erhält in sehr guter Ausbeute den Farbstoff, der in Form seiner freien Säure der Formel

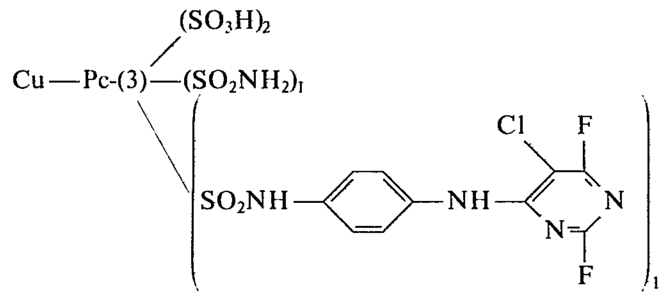

entspricht. Er färbt Baumwolle in türkisen Tönen von ausgezeichneten Echtheiten.

e) Arbeitet man wie unter d) beschrieben, gibt jedoch anstelle der 10 g 5-Chlor-2,4,6-trifluorpyrimidin 10 g 2,4-Difluor-6-methylamino-1,3,5-triazin zu und führt die Umsetzung bei einem pH-Wert von 5,5 bis 6,5 durch, so erhält man in sehr guter Ausbeute den Farbstoff, der in Form seiner freien Säure der Formel

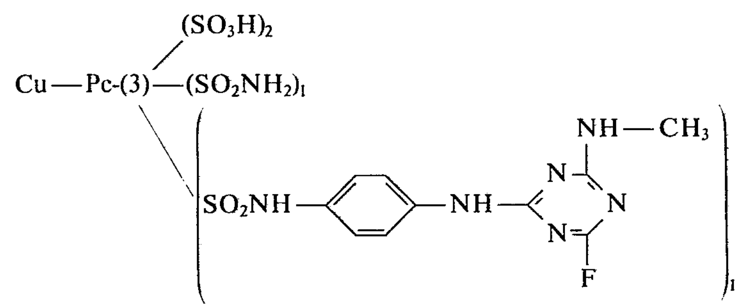

entspricht. Er färbt Baumwolle in türkisen Tönen von ausgezeichneten Echtheiten.

## Färbebeispiel 1

In einem Färbebecher von 550 ml Inhalt, der sich in einem beheizbaren Wasserbad befindet, werden 220 ml Wasser von 20 – 25° C vorgelegt. Man teigt 0,3 g Farbstoff, erhalten nach Beispiel 1 d mit 2 ml kaltem Wasser gut an und fügt 48 ml heißes Wasser (70° C) zu. Die Farbstofflösung mit einem pH-Wert von 7 – 8 wird dem vorgelegten Wasser zugegeben, wobei 10 g Baumwollgarn in dieser Färbeflotte ständig in Bewegung gehalten werden. Innerhalb von 10 Minuten erhöht man die Temperatur der Färbeflotte auf 60° C, setzt 15 g Natriumsulfat (wasserfrei) zu und färbt 30 Minuten weiter. Dann fügt man der Färbeflotte 2 g Natriumcarbonat zu und färbt 60 Minuten bei 60° C. Man entnimmt dann das gefärbte Material der Färbeflotte, entfernt die anhaftende Flotte durch Auswringen oder Abpressen und spült das Material gründlich zunächst mit kaltem Wasser und dann mit heißem Wasser so lange, bis die Spülflotte nicht mehr angeblutet wird. Anschließend wird das gefärbte Material in 500 ml einer Flotte, die 0,5 g Natriumalkylsulfonat enthält, 20 Minuten lang bei Siedetemperatur geseift, erneut gespült und bei 60 – 70° C in einem Trockenschrank getrocknet. Die Baumwolle wird in naßechtem, klarem und blaustichig grünem Ton eingefärbt.

Färbebeispiel 2

3 g Farbstoff, den man nach Beispiel 2 c erhält, werden mit 5 g Harnstoff und 1 g m-Nitrobenzolsulfonsaurem Natrium verrührt, mit 10 ml Wasser von 20–25°C gut angeteigt und mit 80 ml Wasser von 20°C unter Umrühren bei pH 7–8 gelöst. Zu dieser Lösung gibt man 20 ml einer 10%igen Natriumcarbonat-Lösung. Mit der so erhaltenen Klotzflotte werden 20 g Baumwoll-Gewebe auf einem Laborfoulard geklotzt, dessen Walzen mit einem solchen Druck aufeinandergepreßt sind, daß die Flottenaufnahme des Baumwollgewebes ca. 80% seines Trockengewichtes beträgt. Das so geklotzte Gewebe wird auf einem Spannrahmen aufgespannt und im Trockenschrank während 15 Minuten bei 60–70°C getrocknet und anschließend 3 Minuten bei 102°C gedämpft. Man spült dann das gefärbte Material gründlich, zunächst mit kaltem Wasser und dann mit heißem Wasser so lange, bis die Spülflotte nicht mehr angeblutet wird. Anschließend wird das gefärbte Material in 500 ml einer Flotte, die 0,5 g Natriumalkylsulfonat enthält, 20 Minuten lang bei Siedetemperatur geseift, erneut gespült und bei 60–70°C in einem Trockenschrank getrocknet.

Der Farbstoff ist in einem naßechten, klaren, türkisblauen Ton aufgezogen.

Färbebeispiel 3

Mit einem 20-g-Wollstrang wird bei 40°C in ein Färbebad eingegangen, das aus

0,5 g Farbstoff, erhalten nach Beispiel 2 c (bei pH 7–8 gelöst),
3,0 g eines Polyglykoläthers, hergestellt nach DAS 1 041 003, Beispiel 9,
5,0 g Natriumsulfat und
1,2 g Essigsäure 30%ig pro Liter, besteht

und innerhalb 15 Minuten auf 80°C erwärmt. Bei dieser Temperatur läßt man 30 Minuten verweilen, erwärmt zum Kochen und hält diese Temperatur etwa eine Stunde. Nach dem Spülen mit Wasser erhält man eine potting- und walkechte, türkisblaue Färbung.

Druckbeispiel

Ein Baumwollstück wird mit einer Druckpaste, bestehend aus 50 g Farbstoff des Beispiels 2 d, 150 g Harnstoff, 20 g Natriumbicarbonat, 10 g m-Nitrobenzol-sulfonsaurem Natrium, 450 g einer hochviskosen Alginatverdickung und 320 g Wasser, bedruckt und in einen Dämpfer, z. B. des Typs Mather-Platt, bei 103°C gedämpft. Der Druck wird dann mit kaltem, dann mit heißem und schließlich wieder mit kaltem Wasser gespült. Man erhält einen naßechten, türkisblauen Druck.

**Patentansprüche**

1. Verfahren zur Herstellung von Phthalocyaninreaktivfarbstoffen der Formel

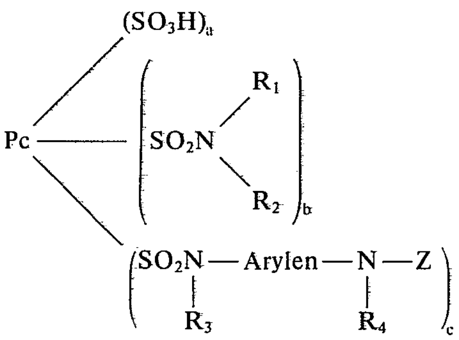

worin

Pc = Rest eines Kupfer- oder Nickel-Phthalocyanins
$R_1$, $R_2$ = Wasserstoff, gegebenenfalls substituiertes Alkyl
$R_3$, $R_4$ = Wasserstoff, gegebenenfalls substituiertes Alkyl
Arylen = ein- oder mehrgliedriges gegebenenfalls substituiertes Arylen, das gegebenenfalls durch ein Sauerstoffatom oder eine Imino-, Carbonyl-, Carbonamid-, Harnstoff-, Sulfonyl- oder Sulfonamid-Gruppe unterbrochen sein kann

Z = 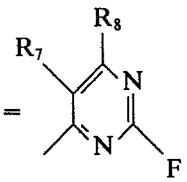 oder 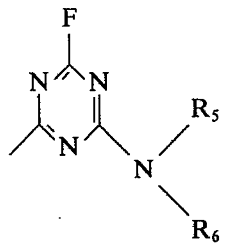

$R_5$, $R_6$ = Wasserstoff, gegebenenfalls substituiertes Alkyl, gegebenenfalls substituiertes Aralkyl oder gegebenenfalls substituiertes Aryl
$R_7$ = H, Cl
$R_8$ = H, F, $CH_3$
a = 1 bis 3
b = 0 bis 2
c = 1 bis 2 und $a+b+c \lesseqgtr 4$,

dadurch gekennzeichnet, daß man Phthalocyaninsulfochlorid-sulfonsäuren der Formel

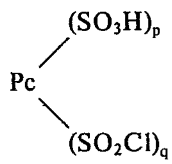

worin

p = 0,5 bis 1,8 (vorzugsweise 0,8 bis 1,4 oder, falls b=0, 1,0 bis 1,6)
q = 1,2 bis 3,5 und p+q=2 bis 4,

mit c Mol eines monoacylierten Arylendiamins der Formel

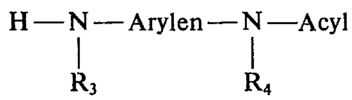

worin $R_3$, $R_4$ und Arylen die obengenannte Bedeutung haben und Acyl eine Acylgruppe darstellt, und gegebenenfalls b Mol eines Amins der Formel

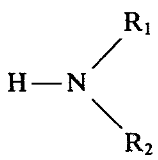

worin $R_1$ und $R_2$ die obengenannte Bedeutung haben,
umsetzt, die Acylaminogruppe verseift und die erhaltenen Aminophthalocyaninfarbstoffe mit c Mol einer Verbindung der Formel

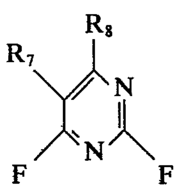

oder mit c Mol einer Verbindung der Formel

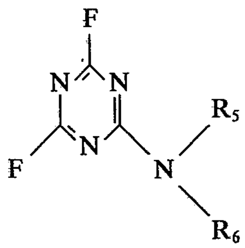

worin $R_5-R_8$ die oben angegebene Bedeutung haben, zur Reaktion bringt.

2. Verfahren gemäß Anspruch 1, wobei Arylen ein gegebenenfalls durch Halogenatome oder $C_1$ bis $C_4$-Alkylgruppen substituierter Phenylen-Rest ist.

3. Verfahren gemäß Anspruch 1, wobei

Pc = Rest eines Kupferphthalocyanins
$R_1$, $R_2$ = Wasserstoff, Methyl, Ethyl
$R_3$, $R_4$ = Wasserstoff, Methyl, Ethyl
Arylen = ein gegebenenfalls durch Halogenatome, Methyl- oder Ethyl-Gruppen substituierter Phenylenrest
$2 \leq a < 3$
$0 < b \leq 1$
c = 1 und $a+b+c=3$ bis 4

sind, dadurch gekennzeichnet, daß man Phthalocyaninsulfochlorid-sulfonsäuren der Formel

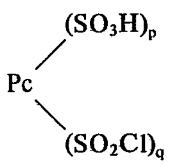

worin

$p = 0{,}5$ bis 1,8 (vorzugsweise 0,8 bis 1,4)
$q = 1{,}2$ bis 3,5 und $p+q=2$ bis 4,

einsetzt.

4. Verfahren gemäß Anspruch 1 zur Herstellung von Phthalocyaninreaktiv-Farbstoffen der Formel

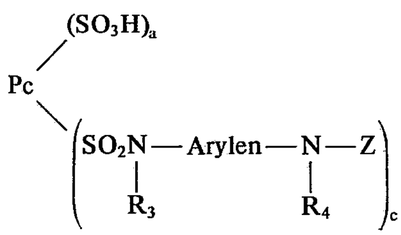

wobei

Pc = Rest eines Nickelphthalocyanins
$R_3$, $R_4$ = Wasserstoff, Methyl, Ethyl;
Arylen, Z, $R_5$, $R_6$, $R_7$ und $R_8$ die obige Bedeutung haben, und
a = 2 bis 3
c = 1 und
$a+c$ = 3 bis 4,

dadurch gekennzeichnet, daß man Phthalocyaninsulfochlorid-sulfonsäuren der Formel

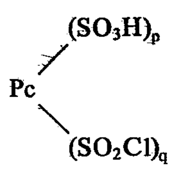

worin

p = 0,5 bis 1,8 (vorzugsweise 1,0 bis 1,6)
q = 1,2 bis 3,5 und
p + q = 3 bis 4,

einsetzt.

## Claims

1. Process for the preparation of phthalocyanine reactive dyestuffs of the formula

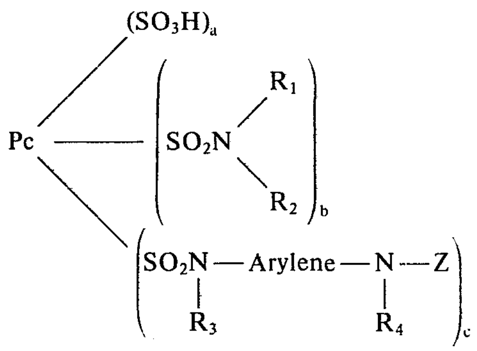

wherein

Pc = the radical of a copper phthalocyanine or nickel phthalocyanine,
$R_1$ and $R_2$ = hydrogen or optionally substituted alkyl,
$R_3$ and $R_4$ = hydrogen or optionally substituted alkyl,
Arylene = a single-membered or multi-membered, optionally substituted arylene radical which can optionally be interrupted by an oxygen atom or an imino, carbonyl, carboxamide, urea, sulphonyl or sulphonamide group,

Z = 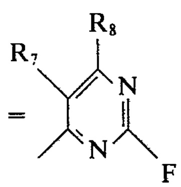 or 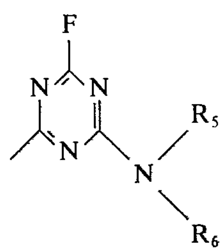

$R_5$ and $R_6$ = hydrogen, optionally substituted alkyl, optionally substituted aralkyl or optionally substituted aryl,
$R_7$ = H or Cl
$R_8$ = H, F or $CH_3$
a = 1 to 3
b = 0 to 2
c = 1 to 2 and
a+b+c $\leqq$ 4,

characterised in that phthalocyanine-(sulphonic acid chloride)-sulphonic acids of the formula

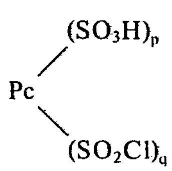

wherein

p = 0.5 to 1.8 (preferably 0.8 to 1.4 or, if b=0, 1.0 to 1.6),
q = 1.2 to 3.5 and
p+q = 2 to 4,

are reacted with c mols of a monoacylated arylenediamine of the formula

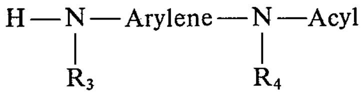

wherein $R_3$, $R_4$ and Arylene have the abovementioned meaning and Acyl represents an acyl group, and, if appropriate, b mols of an amine of the formula

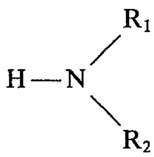

wherein $R_1$ and $R_2$ have the abovementioned meaning,
the acylamino group is saponified and the resulting aminophthalocyanine dyestyffs are reacted with c mols of a compound of the formula

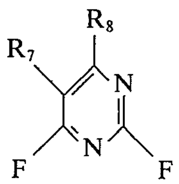

or with c mols of a compound of the formula

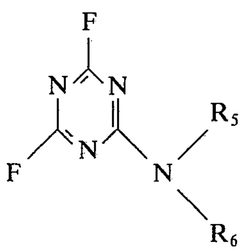

wherein $R_5-R_8$ have the abovementioned meaning.

2. Process according to Claim 1, wherein Arylene is a phenylene radical optionally substituted by halogen atoms or $C_1$ to $C_4$ alkyl groups.

3. Process according to Claim 1, wherein

Pc = the radical of a copper phthalocyanine,
$R_1$ and $R_2$ = hydrogen, methyl or ethyl,
$R_3$ and $R_4$ = hydrogen, methyl or ethyl,
Arylene = a phenylene radical which is optionally substituted by halogen atoms or methyl or ethyl groups,
$2 \leqq a < 3$,
$0 < b \leqq 1$,
c = 1 and
a+b+c = 3 to 4,

characterised in that phthalocyanine-(sulphonic acid chloride)-sulphonic acids of the formula

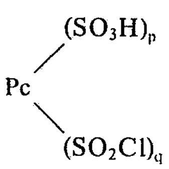

wherein

p = 0.5 to 1.8 (preferably 0.8 to 1.4),
q = 1.2 to 3.5 and
p+q = 2 to 4,

are used.

4. Process according to Claim 1 for the preparation of phthalocyanine reactive dyestuffs of the formula

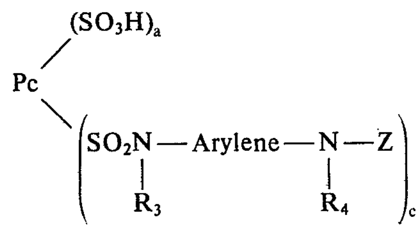

wherein

Pc = the radical of a nickel phthalocyanine,
$R_3$ and $R_4$ = hydrogen, methyl or ethyl;
Arylene, Z, $R_5$, $R_6$, $R_7$ and $R_8$ have the above meanings and
a = 2 to 3
c = 1 and
a+c = 3 to 4,

characterised in that phthalocyanine-(sulphonic acid chloride)-sulphonic acids of the formula

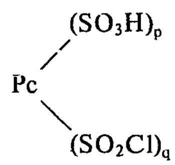

wherein

p = 0.5 to 1.8 (preferably 1.0 to 1.6),
q = 1.2 to 3.5 and
p+q = 3 to 4,

are used.

**Revendications**

1. Procédé de préparation de colorants réactifs de phtalocyanines de formule:

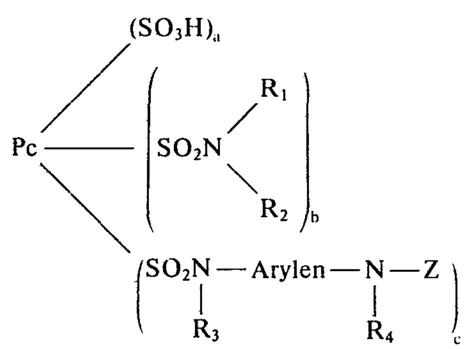

dans laquelle:

Pc = reste d'une phtalocyanine de cuivre ou de nickel,
$R_1$, $R_2$ = hydrogène, alkyle éventuellement substitué,
$R_3$, $R_4$ = hydrogène, alkyle éventuellement substitué,
Arylen = arylène à un ou plusieurs chaînons éventuellement substitué qui peut, le cas échéant, être interrompu par un atome d'oxygène ou un groupe imino, carbonyle, carboxamide, urée, sulfonyle ou sulfonamide,

Z = 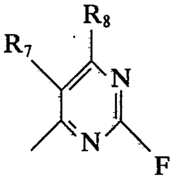 ou 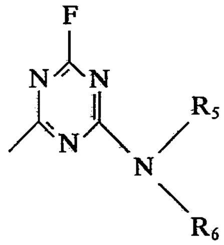

$R_5$, $R_6$ = hydrogène, alkyle éventuellement substitué, aralkyle éventuellement substitué ou aryle éventuellement substitué,
$R_7$ = H, Cl,
$R_8$ = H, F, $CH_3$,
a = 1 à 3,
b = 0 à 2,
c = 1 à 2 et $a+b+c \leq 4$,

caractérisé en ce que l'on fait réagir des acides sulfoniques-sulfochlorures de phtalocyanines de formule:

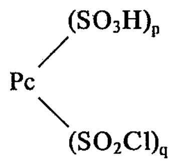

dans laquelle:

p = 0,5 à 1,8 (de préférence 0,8 à 1,4 ou bien, lorsque b=0, 1,0 à 1,6)
q = 1,2 à 3,5 et p+q=2 à 4,

avec c moles d'une arylène-diamine monoacylée de formule:

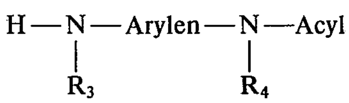

dans laquelle:
$R_3$, $R_4$ et Arylen ont les significations indiquées ci-dessus et Acyl représente un groupe acyle, et, le cas échéant, b moles d'une amine de formule:

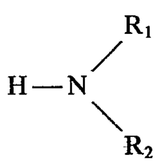

dans laquelle:
$R_1$ et $R_2$ ont les significations indiquées ci-dessus,
on saponifie le groupe acylamino et on fait réagir les colorants d'aminophtalocyanines obtenus avec c moles d'un composé de formule:

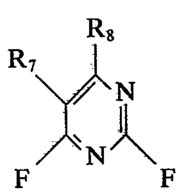

ou avec c moles d'un composé de formule:

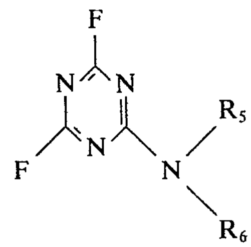

les symboles $R_5$ à $R_8$ ayant les significations indiquées ci-dessus.

2. Procédé selon la revendication 1, dans lequel Arylen représente un reste phénylène éventuellement substitué par des atomes d'halogènes ou des groupes alkyle en $C_1-C_4$.

3. Procédé selon la revendication 1, dans lequel:

Pc = reste d'une phtalocyanine de cuivre,
$R_1$, $R_2$ = hydrogène, méthyle, éthyle,
$R_3$, $R_4$ = hydrogène, méthyle, éthyle,
Arylen = un reste phénylène éventuellement substitué par des atomes d'halogènes, des groupes méthyle ou éthyle,
$2 \leq a < 3$,
$0 < b \leq 1$,
c = 1 et $a+b+c=3$ à 4,

caractérisé en ce que l'on utilise des acides sulfoniques-sulfochlorures de phtalocyanines de formule:

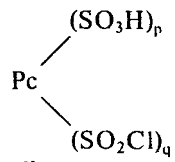

dans laquelle:

p = 0,5 à 1,8 (de préférence 0,8 à 1,4),
q = 1,2 à 3,5 et $p+q=2$ à 4.

4. Procédé selon la revendication 1, pour la préparation de colorants réactifs de phtalocyanines de formule:

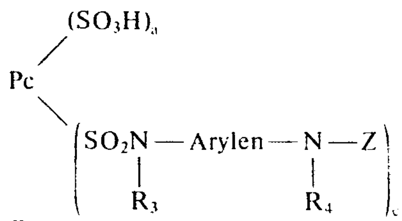

dans laquelle:

Pc = reste d'une phtalocyanine de nickel,
$R_3$, $R_4$ = hydrogène, méthyle, éthyle,
Arylen, Z, $R_5$, $R_6$, $R_7$ et $R_8$ ont les significations indiquées ci-dessus, et
a = 2 à 3,
c = 1 et
a+c = 3 à 4,

caractérisé en ce que l'on utilise des acides sulfoniques-sulfochlorures de phtalocyanines de formule:

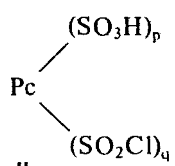

dans laquelle:

p = 0,5 à 1,8 (de préférence 1,0 à 1,6),
q = 1,2 à 3,5, et
p+q = 3 à 4.